Europäisches Patentamt

European Patent Office

Office européen des brevets

(11) Veröffentlichungsnummer: **0 236 274**
**A1**

## (12) EUROPÄISCHE PATENTANMELDUNG

(21) Anmeldenummer: **87810119.5**

(22) Anmeldetag: **03.03.87**

(51) Int. Cl.⁴: **F 16 L 55/16**
**B 05 C 7/08, B 05 B 13/06**

(30) Priorität: **03.03.86 CH 874/86**

(43) Veröffentlichungstag der Anmeldung:
**09.09.87 Patentblatt 87/37**

(84) Benannte Vertragsstaaten:
**AT CH DE FR GB IT LI**

(71) Anmelder: **Futurtech AG**
**Austrasse 52**
**FL-9490 Vaduz (LI)**

(72) Erfinder: **Lona, Norbert**
**Brunnenstrasse 9**
**CH-9400 Rorschacherberg (CH)**

(74) Vertreter: **White, William et al**
**Isler AG Patentanwalts-Bureau Walchestrasse 23**
**CH-8006 Zürich (CH)**

(54) **Vorrichtung zum Ausbessern von Rohren.**

(57) Ein Wagen (1) ist durch zwei Sätze (2,3) von abgefederten Rollen (4,5) koaxial zur Achse (11) eines auszubessernden Rohres (9) geführt. Der Wagen trägt einen Getriebemotor (28), auf dessen Abtriebswelle (29, 30) ein Verteilorgan in Form von Rollern (41) befestigt ist. Über ein Zuführrohr (45) wird Beschichtungsmaterial, z.B. ein Duroplast, auf die Unterseite der Rohrwand (8) aufgetragen und mit den drehenden Rollern (41) über den Umfang verteilt. Damit können schadhafte Kanalisationsrohre einwandfrei und mit geringem Aufwand beschichtet werden.

Fig. 1

EP 0 236 274 A1

**Beschreibung**

Vorrichtung zum Ausbessern von Rohren

Aus der GB-A 1'243'613 ist eine Vorrichtung bekannt mit einem auf radial gerichteten, über den Umfang verteilten Rollen geführten Wagen mit einem Reservoir für Dichtungsmaterial und einem Druckluftmotor, der einen umlaufenden Spachtel antreibt. Ueber eine Pumpe und flexible, umlaufende Schläuche wird das Dichtungsmaterial aus dem Reservoir dem Spachtel zugeführt. Ueber einen Fühler können die abzudichtenden Verbindungsstellen einer Rohrleitung festgestellt werden. An einem Zuleitungsrohr für Druckluft kann die Vorrichtung in der Rohrleitung an die gewünschte Stelle geschoben werden. Diese bekannte Vorrichtung eignet sich zum Abdichten von Verbindungsstellen einer aus Metall bestehenden Gas-Hauptleitung. Wegen des beschränkten Fassungsvermögens des Reservoirs ist sie nicht geeignet zum Ausbessern von Kanalisationsrohren.

Für den gleichen Zweck ist aus der GB-A 1'591'409 eine Vorrichtung mit radial federnden, über den Umfang verteilten Rollen bekannt. Diese Vorrichtung hat ebenfalls ein Reservoir für das auf die Verbindungsstellen einer Rohrleitung aufzubringende Dichtmaterial. Das Dichtmaterial wird mit einer umlaufenden Düse aufgesprüht.

Die DE-A 3'429'881 beschreibt eine Vorrichtung gemäss Oberbegriff des Anspruchs 1 zum Ausbessern von Kanalisationsrohren. Sie umfasst einen Wagen mit zwei angetriebenen Rädern und einem lenkbaren Führungsrad. Ueber einen Schlauch wird einem Behälter Beschichtungsmaterial zugeführt, das mit Härter vermischt und einer Schleuder zugefördert wird. Das aufgeschleuderte Material wird mit umlaufenden Streichblechen glattgestrichen. Diese Vorrichtung ist kompliziert, störanfällig und schwer zu reinigen.

Aus der GB-A 2'150'050 ist eine weitere Vorrichtung zum Beschichten eines Rohres bekannt. Hier ist ein Wagen mit drei gleichmässig über den Umfang verteilten Radsätzen ausgerüstet. Einer der drei Radsätze wird durch einen Motor angetrieben. Der Wagen trägt an einem Ende einen Druckluftmotor mit einer Schleuder, die das Beschichtungsmaterial auf die Rohrwand aufschleudert.

Weitere Vorrichtungen zum Beschichten von Rohren sind aus der US-A 3,810,441 und der US-A 3,960,644 bekannt.

Bei allen diesen bekannten Vorrichtungen wird das Beschichtungsmaterial direkt auf den ganzen Umfang des Rohres aufgebracht, nämlich aufgeschleudert oder aufgespritzt oder einem umlaufenden Spachtel über seinen ganzen Umlaufweg zugeführt. Dies ergibt Probleme mit der Verschmutzung des Wagens, der nach jedem Einsatz aufwendig gereinigt werden muss.

Der vorliegenden Erfindung liegt die Aufgabe zugrunde, eine Vorrichtung gemäss Oberbegriff des Anspruchs 1 derart weiter zu bilden, dass sie einfach, wenig störanfällig und leicht zu warten ist. Diese Aufgabe wird durch die kennzeichnenden Merkmale des Anspruchs 1 gelöst.

Nachfolgend wird ein Ausführungsbeispiel der Erfindung anhand der Zeichnung erläutert. Darin zeigt:

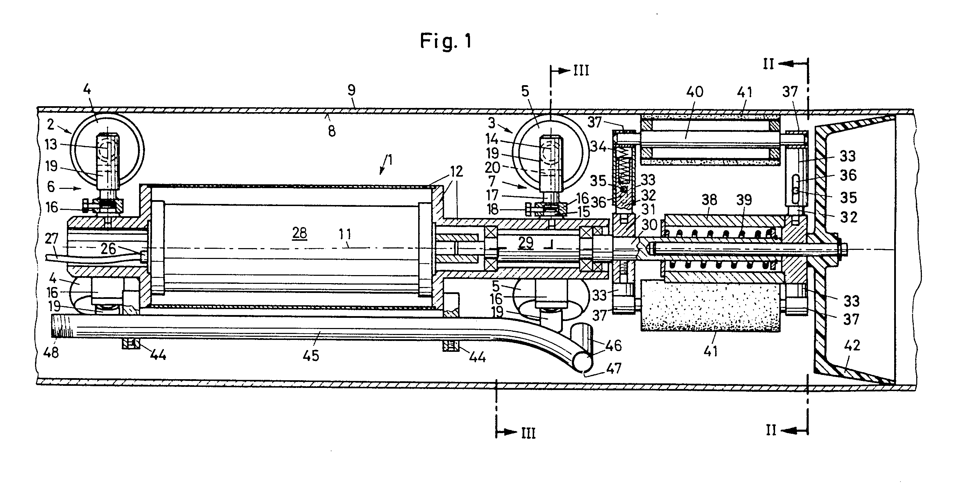

Fig. 1 einen Längsschnitt durch eine erfindungsgemässe Vorrichtung,

Fig. 2 einen Schnitt längs der Linie II-II in Fig. 1,

Fig. 3 einen Querschnitt längs der Linie III-III in Fig. 1, und

Fig. 4 und Fig. 5 eine andere Variante eines Verteilorgans im Aufriss und Seitenriss.

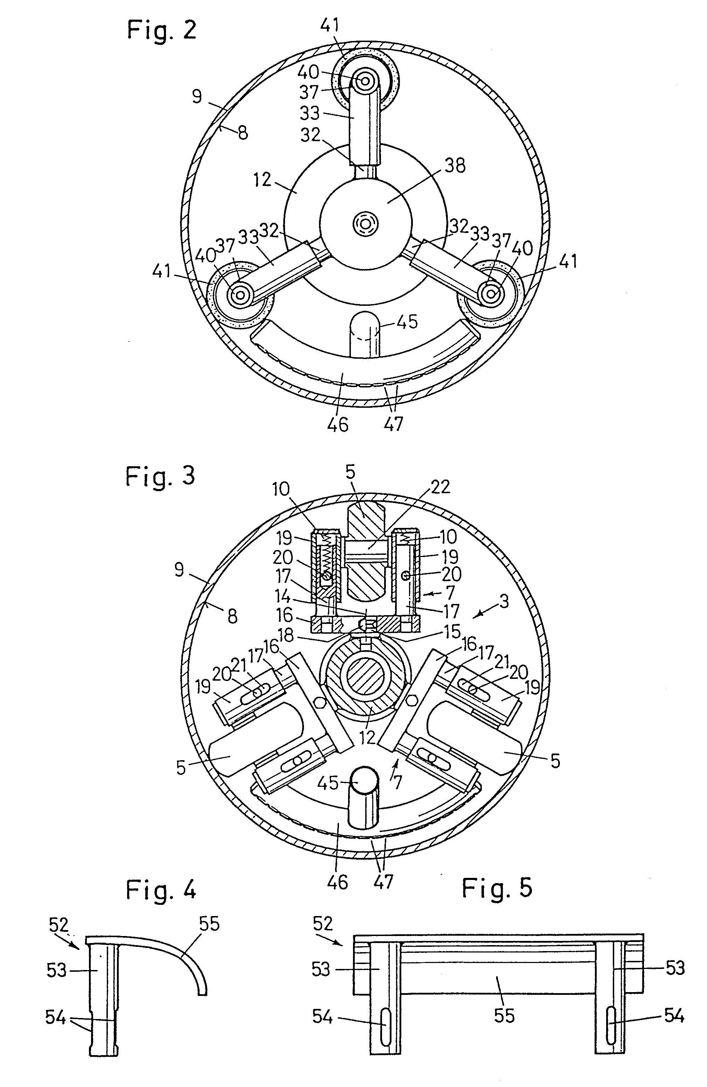

Die dargestellte Vorrichtung hat einen Wagen 1 mit zwei Sätzen 2, 3 von je drei Führungsrollen 4, 5. Die Rollen 4, 5 sind in radial teleskopischen, gefederten Trägern 6, 7 gelagert und stützen sich gegen die Wand 8 des auszukleidenden Rohres 9 ab. Durch die Federn 10 (Fig. 3) der Träger 6, 7 wird die Längsachse 11 des Wagens 1 im Rohr 9 zentriert. Die Träger 6, 7 sind um senkrecht zur Längsachse 11 stehenden Achsen 13, 14 schwenkbar und arretierbar mit dem Gehäuse 12 verbunden. Dazu sind am Gehäuse 12 für jeden Satz 2, 3 drei radial abstehende Bolzen 15 angeschweisst. Auf den Bolzen 15 ist je eine Trägerplatte 16 mit zwei parallel zur Achse 14 abstehenden Stiften 17 drehbar und durch eine Schraube 18 gesichert und arretiert. Auf den Stiften 17 sind Hülsen 19 geführt und mit Querstiften 20 gesichert, die Langlöcher 21 in den Hülsen 19 durchdringen. Die beiden Hülsen 19 sind mit den Federn 10 radial nach aussen belastet und tragen die Achse 22 des Rades 5.

Im Gehäuse 12 ist ein in der Drehrichtung umschaltbarer Gleichstrom-Getriebemotor 28 mit einem Stecker 26 für ein Anschlusskabel 27 befestigt, dessen Abtriebswelle 29 koaxial zur Längsachse 11 des Wagens 1 über das hintere Ende des Gehäuses 12 vorsteht. Auf dem Wellenende 30 ist benachbart dem Gehäuse 12 ein Ring 31 mit drei radial abstehenden Bolzen 32 starr befestigt. Auf den Bolzen 32 sind Hülsen 33 längsverschiebbar geführt und durch Federn 34 radial nach aussen vorbelastet. Die Hülsen 33 sind auf den Bolzen 32 durch je einen durch eine Querbohrung des Bolzens 32 und einen Längsschlitz 36 gesteckten Stift 35 gegen Verdrehen gesichert. Am freien Ende tragen die Hülsen 33 ein Lager 37 mit einer parallel zur Achse 11 verlaufenden Lagerbohrung.

Auf dem Wellenende 30 ist eine Federhülse 38 axial verschiebbar, aber gegen Verdrehen gesichert gelagert und mit einer Feder 39 in Richtung des Gehäuses 12 vorbelastet. Die Hülse 38 trägt an ihrem freien Ende drei weitere Bolzen 32 mit Hülsen 33 und Lagern 37. In je zwei axial fluchtenden Lagern 37 ist die Welle 40 eines Lammfellrollers 41 gelagert. Am Wellenende 30 ist ein frei drehbares Glättewerkzeug 42 in Form eines Kegelstumpfes angebracht.

Unter dem Gehäuse 12 ist mit Trägern 44 ein Rohr 45 für die Zufuhr von Beschichtungsmaterial, z.B. Duroplast, gehalten. Das Rohr 45 hat am einen Ende zwischen den Rollern 41 und dem Radsatz 3 einen kreissegmentsförmigen Mündungsbogen 46 mit mehreren radialen Mündungsöffnungen 47. Am gegenüberliegenden Ende hat das Rohr 45 ein Gewinde 48 zum Aufschrauben einer Schlauchkupplung.

Zum Ausbessern eines Kanalisationsrohres 9 wird dieses zunächst gereinigt, nötigenfalls zur Beseitigung von stark haftenden Ablagerungen mittels einer für diesen Zweck bekannten Fräse, und anschliessend mit Warmluft getrocknet. Die dargestellte Vorrichtung ist so dimensioniert, dass sie durch einen Schacht in das Rohr 9 eingebracht werden kann, und zwar mit dem Radsatz 2 voran. Vom nächsten Schacht her wird das Kabel 27 durch das Rohr 9 eingezogen und angekuppelt. Ausserdem wird ein Schlauch für das Beschichtungsmaterial eingezogen und mit der Schlauchkupplung auf dem Gewinde 48 verbunden. Nun wird der Wagen 1 langsam am Schlauch durch das Rohr 9 durchgezogen, während gleichzeitig über den Schlauch Beschichtungsmaterial zugeführt und über die Oeffnungen 47 auf die untere Seite des Rohres 9 aufgebracht wird. Der Motor 28 treibt die Welle 29 an und die Roller 41 verteilen das Beschichtungsmaterial gleichmässig über die Innenwand 8 des Rohres 9. Der nachfolgende Glättekegel 42 gleicht die noch vorhandenen Unebenheiten vollständig aus und es entsteht eine glatte Beschichtung.

Das auf das Gehäuse 12 wirkende Gegendrehmoment kann durch leicht Schrägstellung einiger oder aller Rollen 4, 5 aufgefangen werden. Damit kann sichergestellt werden, dass das rohr 45 annähernd an der Unterseite des Wagens 1 verbleibt. Ein leichtes Auswandern aus dieser Lage ist zulässig und wird über die relativ kurzen Abschnitte von maximal 30 m zwischen zwei Schächten selten überschritten. Sollte dies trotzden einmal eintreten, so kann die Drehrichtung des Motors umgekehrt werden, um den Wagen wieder in seine Normallage zurückzuführen. Die Umkehr der Drehrichtung ist auch nützlich, wenn die Roller 41 stecken bleiben sollten, z.B. wegen einer nicht entfernten Ablagerung im Rohr 9.

Wenn die Vorrichtung für längere Strecken verwendet werden sollte, wäre es auch möglich, die Spur der Räder 4, 5 des einen Radsatzes 2, 3 automatisch einzustellen, z.B. gesteuert durch einen Neigungsschalter.

Nach dem Durchlaufen des Wagens 1 durch das Rohr 9 ist dieses gleichmässig mit einer Schicht des Beschichtungsmaterials beschichtet, wobei die Schichtstärke in gewissen Grenzen durch die pro Laufmeter zugeführte Menge an Beschichtungsmaterial variiert werden kann. Wenn grössere Schichtstärken erwünscht sind, kann nach dem Abbinden der ersten Schicht eine weitere Schicht aufgetragen werden.

Falls das Rohr 9 zwischen zwei Schächten seitlich kleine Einmündungen hat, werden diese beim Beschichten des Rohres nicht verschlossen, im Gegensatz zu den eingangs erwähnten Auskleidungen mit Schläuchen, wo die Schläuche nach dem Verlegen durch diese Einmündungen aufgebohrt werden müssen, was meist sehr aufwendig ist. Wegen dieser seitlichen Einmündungen ist auch die Anordnung von drei statt vier oder mehr Rädern pro Radsatz besonders zweckmässig, denn mit dieser Anordnung wird vermieden, dass ein Rad in eine solche Einmündung einbricht und damit den Wagen 1 blockiert. Mit der Vorrichtung ist es ohne weiteres auch möglich, bloss lokale Schadstellen, die z.B. mittels eines Kanalfernsehers lokalisiert wurden, auszubessern.

Zum Auswechseln der Roller 41 wird die Federhülse 38 entgegen der Kraft der Feder 39 gezogen, so dass die Roller 41 aus den Lagern 37 entnommen und andere Roller eingesetzt werden können.

Je nach Beschichtungsmaterial kann auch ein anderes Verteilorgan als die Roller 41 zweckmässig sein, z.B. der in Fig. 4 und 5 dargestellte Spachtel 52. Um diesen einzusetzen, werden zunächst die Roller 41 entfernt und hierauf nach Demontieren der Stifte 35 die Hülsen 33 abgenommen. Die Federhülse 38 wird soweit ausgezogen, dass der Abstand zwischen den Bolzen 32 dem Abstand zwischen zwei Hülsen 53 des Spachtels 52 entspricht. Die Hülsen 53 werden auf die Bolzen 32 aufgestecht und wiederum mittels der durch Langlöcher 54 gesteckten Stifte 35 gesichert. Bei dieser Variante verteilt ein gekrümmtes Blech 55 das Beschichtungsmaterial über den Umfang der Innenwand 8 und streicht dieses glatt.

Um auch Rohre 9 mit grösserem Durchmesser beschichten zu können, können nach Lösen der Schrauben 18 die Radsätze 2, 3 gegen Radsätze mit längeren Stiften 17 ausgetauscht werden. Beim Verteilorgan sind die Hülsen 33 gegen entsprechend längere Hülsen auszutauschen.

Statt den Wagen am Schlauch zu ziehen, kann am Gehäuse 12 vorn eine Kupplung für ein Zugseil angeordnet werden. Es wäre grundsätzlich möglich, statt der Rollen 4, 5 Gleitkufe anzuordnen. Dabei müsste der Motor 28 alternierend rechts- und linksläufig angetrieben werden, um den Wagen 1 annähernd in der Lage mit dem Rohr 45 unten zu halten. Alternativ wäre es auch möglich, zwei gegenläufige Verteilorgane hintereinander anzuordnen.

## Patentansprüche

1. Vorrichtung zum Beschichten der Innenwand (8) von Rohren (9) mit einem fliessfähigen Beschichtungsmaterial, umfassend einen auf einem Satz (2) von Rollen (4) geführten Wagen (1), der einen Anschluss (48) am vorderen Ende zum Verbinden mit einem Zuführschlauch für das Beschichtungsmaterial und einen Motor (28) mit einer Abtriebswelle (29,30) aufweist, auf welcher am hinteren Ende ein Verteilorgan (41,52) befestigt ist, dadurch gekennzeichnet, dass der Anschluss (48) über eine Verbindungsleitung (45) mit einer Auslauföffnung (47) an der Unterseite des Wagens (1) und zwischen dem Rollensatz (2) und dem Verteilorgan (41,52) verbunden ist, und dass der Rollensatz (2) mindestens drei radial abgefederte Rollen (4) umfasst.

2. Vorrichtung nach Anspruch 1, dadurch gekennzweichnet, dass sie ausser dem benachbart dem vorderen Ende des Wagens (1) angeordneten ersten Rollensatz (2) einen zweiten Satz (3) von mindestens drei radial abgefederten Rollen (5) umfasst, der vor dem Verteilorgan (41,52) angeordnet ist.

3. Vorrichtung nach Anspruch 1 oder 2, dadurch gekennzeichnet, dass die Drehachsen (22) mindestens einiger der Rollen (4,5) um radiale Schwenkachsen (13,14) einstellbar und arretierbar sind

4. Vorrichtung nach einem der Ansprüche 1 bis 3, dadurch gekennzeichnet, dass die Drehrichtung des Motors (28) umkehrbar ist.

5. Vorrichtung nach einem der Ansprüche 1 bis 4, dadurch gekennzeichnet, dass das Verteilorgan (41,52) lösbar und austauschbar an einem Träger (32) befestigt ist.

6. Vorrichtung nach Anspruch 5, dadurch gekennzeichnet, dass das Verteilorgan mehrere gegenüber dem Träger (32) radial abgefederte, drehbare Roller (41) umfasst.

7. Vorrichtung nach einem der Ansprüche 1 bis 6, dadurch gekennzeichnet, dass hinter dem Verteilorgan (41, 52) ein um die Achse der Antriebswelle (29, 30) frei drehbares kegelstumpfförmiges Glättwerkzeug (42) angeordnet ist.

Fig.1

0236274

**Fig. 2**

**Fig. 3**

**Fig. 4**

**Fig. 5**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 371 242 (SIARGAS-SOCIETA ITALIANA ASSISTENZA RETI GAS S.p.A.) * Abbildungen 1,3,4,10; Seite 1, letzte Zeile; Seite 2; Seite 3, Zeilen 1-15 * | 1,6 | F 16 L 55/16 B 05 C 7/08 B 05 B 13/06 |
| | --- | | |
| D,A | GB-A-1 243 613 (TATE PIPE LINING PROCESS LTD.) * Abbildung 1; Seite 2, Zeilen 37-48 * | 1,2 | |
| | ----- | | |

|  |
|---|
| RECHERCHIERTE SACHGEBIETE (Int. Cl.4) |
| F 16 L B 05 C B 05 B |

Der vorliegende Recherchenbericht wurde für alle Patentansprüche erstellt.

| Recherchenort | Abschlußdatum der Recherche | Prüfer |
|---|---|---|
| DEN HAAG | 01-06-1987 | NOESEN R.F. |